# EUROPÄISCHE PATENTANMELDUNG

(11) **EP 1 060 915 A2**
(43) Veröffentlichungstag der Anmeldung: **20.12.2000**
(21) Anmeldenummer: 00112543.4
(22) Anmeldetag: 14.06.2000
(51) Int. Cl.: B60B 21/02, B60C 15/02, B60C 17/00

(54) **Fahrzeugrad mit - insbesondere einteiliger - Felge und schlauchlosem Luftreifen, das für Notlauf geeignet ist**

(30) Priorität: 16.06.1999 DE 19927336
(71) Anmelder: Continental Aktiengesellschaft, 30165 Hannover (DE)
(72) Erfinder: Bederna, Christoph, 31515 Steinhude (DE); Frerichs, Udo, 30855 Langenhagen (DE); Hesse, Heiko, 30900 Wedemark (DE); Kaeder, Ansgar, 30459 Hannover (DE); Koch, Achim, 31303 Burgdorf (DE); Kuhlmann, Silvia, 30659 Hannover (DE); Korsten, Markus, 34497 Korbach (DE); Reisdorf, Wolfgang, 4730 Hauset (BE); Schmeitz, Martin, 30159 Hannover (DE); Walloch, Frank, 31228 Peine (DE); Wilke, Alfred, 30659 Hannover (DE)

(57) **Zusammenfassung**

Fahrzeugrad mit - insbesondere einteiliger - Felge und schlauchlosem Luftreifen (3), das für Notlauf geeignet ist,
- mit auf der radial äußeren Mantelfläche der Felge ausgebildeter Notlaufstützfläche (14)
- mit an jeder Seitenwand des Luftreifens zur Innenseite des Luftreifens hin verdickt ausgebildeten Wulst zur Befestigung des Luftreifens an der Felge,
- mit wenigstens in einer axialen Stirnseite der Felge einstückig ausgebildeter Ringkammer (10) mit einer radial inneren, einer radial äußeren, einer axial zur Felgenmitte hin inneren und einer axial zur Felgenaußenseite hin äußeren Ringkammerwand, die nach axial außen zur Stirnseite der Felge hin im radial äußeren Bereich als ein radial nach innen gerichtetes Felgenhorn ausgebildet und in ihrem radial inneren Bereich mit einer ringförmigen Durchgangsöffnung ausgebildet ist,
- wobei ein Füllring (42) innerhalb der Ringkammer (10) auf der radial inneren Ringkammerwand formschlüssig radial fest gelagert ist,
- wobei die Seitenwand (9) des Reifens sich zumindest im Betriebszustand des Fahrzeugrades von axial außen durch die Öffnung (24) in der axial außen ausgebildeten Ringkammerwand (23) hindurch nach innen erstreckt und der Wulst in der Ringkammer auf der radialen Außenseite des Füllrings radial fest gelagert ist und formschlüssig nach radial außen, nach axial innen und nach axial außen zur Ringkammer ausgebildet ist, sodaß der Wulst nach radial außen, nach axial außen, nach axial innen und über den Füllring nach radial innen formschlüssig mit der einstückig ausgebildeten Ringkammer verbunden ist,
- wobei die radial äußere zur radial äußeren Ringkammerwand (22) hin gerichtete Seite des Wulstes zumindest im Betriebszustand des Fahrzeugrades nach radial außen mit formschlüssigem Berührkontakt zur radial äußeren Ringkammerwand angeordnet ist,
- wobei in einem Teilbereich zwischen radial äußerer zur radial äußeren Ringkammerwand hin gerichteter Seite des Wulstes und radial äußeren Ringkammerwand ein radialer Spaltbereich ausgebildet ist, in dem sich Wulst und Ringkammerwand im Betrieb nicht berühren.

## Beschreibung

Die Erfindung betrifft ein Fahrzeugrad mit ― insbesondere einteiliger - Felge und schlauchlosem Luftreifen, das für Notlauf geeignet ist.

Schlauchlose Fahrzeugluftreifen moderner Bauart sind üblicherweise an den radial inneren Enden ihrer Seitenwände zu Wülsten ausgebildet. Von Reifenwulst zu Reifenwulst erstreckt sich eine aus mit Gummi beschichteten Festigkeitsträgem ausgebildete Karkasse radialer Bauart. In jedem Reifenwulst ist ein ringförmiger, konzentrisch zur Reifenachse angeordneter zugfester, steifer Wulstkern aus Stahl ausgebildet, in dem die Karkasse verankert ist. Der Fahrzeugluftreifen wird bei der Montage des Fahrzeugluftreifens auf der Feige mit seinem Wulst auf der radial äußeren Mantelfläche der Feige befestigt. Die hohe Zugfestigkeit und Steifigkeit des Wulstes, die durch die Zugfestigkeit und Steifigkeit des Wulstkerns bewirkt wird, sichert die beim schlauchlosen Reifen gewünschte Abdichtung in der Felgen-Reifenverbindung und sichert den dichten Sitz des Reifens auf der Felge im aufgepumpten Zustand des Reifens. Die zugsteife, zugfeste Ausbildung des Wulstkerns verhindert auch bei anspruchsvollen Fahrmanövern ein axiales Abrutschen des Fahrzeugrades von der Feige über das nach radial außen gerichtete Felgenhorn.

Zur Montage bzw Demontage des Fahrzeugluftreifens muß der zugfeste, zugsteife Wulst bei einer einteiligen Feige mit seinem innendurchmesset über den gegenüber dem Innendurchmesser des steifen Wulstes größeren Außendurchmesser des Felgenhorns bewegt werden. Um dies zu ermöglichen ist zusätzlicher Aufwand, z.B. die Ausbildung der Feige mit einem Tiefbett, erforderlich.
Im Falle des Luftdruckverlustes knickt die Reifenseitenwand ein. Dabei kann sie auf das zur axialen Sicherung des Fahrzeugluftreifens auf der Felge ausgebildete Felgenhorn gepreßt werden. Bei Weiterfahrt des Fahrzeugs kann die Reifenseitenwand und das Felgenhorn zerstört werden. Der Fahrzeugluftreifen kann von der Felge springen.

Um dies zu verhindern und um ein sicheres Weiterfahren trotz Druckluftverlust zu ermöglichen, wurde vorgeschlagen auf der radialen Außenseite der einteiligen Feige die Felge mit zusätzlichen über das Felgenhorn radial hinausragenden Notlaufstützflächen auszubilden, auf denen sich der Fahrzeugluftreifen mit seiner radialen Innenseite seines Laufflächenbereichs bei Druckluftverlust abstützt und somit Notlaufeigenschaften nach Druckluftverlust gewährleistet. Die Montage und Demontage der Fahrzeugluftreifen auf derartige Felgen erweist sich als schwierig, da die zugfesten, steifen Wülste sogar über die noch größeren Außendurchmesser der Notlaufstützflächen bewegt werden müssen und die Notlaufstützflächen den zwischen den Wulstsitzflächen auf den Felgen zum Einsatz von Montagehilfen, z.B. für die Ausbildung eines Tiefbetts, zur Verfügung stehenden axialen Raum zusätzlich beschränken. Um den steifen, zugfesten Wulst überhaupt montieren zu können ist das ausführbare Verhältnis zwischen dem Außendurchmesser der Notlaufstützfläche zu dem Innendurchmesser des zugfesten, steifen Wulstes sehr begrenzt. Der Außendurchmesser der Notlaufstützfläche darf nur so groß gewählt werden, daß der steife Wulst noch darüber bewegt werden kann. Hierdurch werden die Notlaufstützflächen zu einem großen Teil vom vergleichsweise kleinen Innendurchmesser des steifen Wulstes und somit von einem für die Notlaufeigenschaften unerheblichen Parameter bestimmt. Über für optimale Notlaufeigenschaften abgestimmte größere Außendurchmesser der Notlaufstützflächen der Felgen lassen sich die Fahrzeugluftreifen nicht mehr montieren.

Von CTS-Reifen ist es bekannt, schlauchlose Fahrzeugluftreifen mit ihren Wülsten auf Stützflächen an der radial inneren Seite der mit an der radial äußeren Seite mit Notlaufstützflächen ausgebildeten, einteiligen CTS-Felge abzustützen. In jedem Reifenwulst ist ein ringförmiger, konzentrisch zur Reifenachse angeordneter zugfester, drucksteifer Wulstkern aus Stahl ausgebildet, in dem die Karkasse verankert ist. Der CTS-Fahrzeugluftreifen wird bei der Montage des Fahrzeugluftreifens auf der Felge mit seinem Wulst auf der radial inneren Mantelfläche der Felge befestigt. Die hohe Zugfestigkeit und Drucksteifigkeit des Wulstes, die durch die Zugfestigkeit und Drucksteifigkeit des Wulstkerns bewirkt wird, sichert die beim schlauchlosen Reifen gewünschte Abdichtung in der Felgen-Reifenverbindung und sichert den dichten Sitz des Reifens auf der Felge im aufgepumpten Zustand des Reifens. Die drucksteife, zugfeste Ausbildung des Wulstkerns verhindert auch bei anspruchsvollen Fahrmanövern ein axiales Abrutschen des Fahrzeugrades von der Felge über das auf der radial inneren Seite der Felge nach radial innen gerichtete Felgenhorn. Ein solcher Reifen ist beispielsweise aus der DE-30 00 428 C2 bekannt.

Da sowohl der Felgensitz als auch das Felgenhorn auf der radial inneren Seite der Felge ausgebildet sind, steht bei einem CTS-Reifen ein größerer axialer Erstreckungsbereich zur Ausbildung von Notlaufstützflächen auf der radial äußeren Mantelfläche der Felge zur Verfügung als bei dem an der radial äußeren Mantelfläche einer Felge herkömmlich befestigten Reifen-Rad-System. Das Felgenhorn stellt auf der radial äußeren Seite der CTS-Felge keinen den Notlauf störendes Felgenelement mehr dar.

Zur Montage bzw Demontage des CTS-Fahrzeugluftreifens muß der zugfeste, drucksteife Wulst mit seinem Innendurchmesser auf der radial äußeren Mantelfläche der Felge über den gegenüber dem Innendurchmesser des steifen Wulstes größeren Außendurchmesser der Notlaufstützflächen und auf der radial inneren Mantelfläche der Felge über den gegenüber dem Innendurchmesser des steifen Wulstes kleineren Innendurchmesser bewegt werden. Um dies zu ermöglichen, ist zusätzlicher Aufwand, zB die Ausbildung der Felge mit einem Hochbett auf der radial inneren Mantelfläche sowie aufwendige spezielle Montagetechniken, erforderlich.

Die Montage und Demontage der Fahrzeugluftreifen auf derartige Felgen erweist sich somit ebenso als schwierig, da auch die zugfesten, drucksteifen CTS-Wülste über die noch größeren Außendurchmesser der Notlaufstützflächen auf der radialen Außenseite der Felge und über den gegenüber dem Innendurchmesser des steifen Wulstes kleineren Innendurchmesser auf der radial inneren Mantelfläche der Felge bewegt werden müssen. Um den drucksteifen, zugfesten Wulst überhaupt montieren zu können, ist auch beim CTS-Reifen das ausführbare Verhältnis zwischen dem Außendurchmesser der Notlaufstützfläche zu dem Innendurchmesser des zugfesten, drucksteifen Wulstes noch sehr begrenzt. Der Außendurchmesser der Notlaufstützfläche darf nur so groß gewählt werden, daß der steife Wulst noch darüber bewegt werden kann. Hierdurch werden die Notlaufstützflächen auch beim CTS-Reifen noch zu einem großen Teil vom vergleichsweise kleinen Durchmesser des steifen Wulstkerns und somit von einem für die Notlaufeigenschaften unerheblichen Parameter bestimmt. Über für optimale Notlaufeigenschaften abgestimmte größere Außendurchmesser der Notlaufstützflächen der Felgen lassen sich die Fahrzeugluftreifen mit ihren steifen Wülsten nicht mehr montieren.

Aus der DE 19530939 C1 ist ein Fahrzeugrad mit einteiliger Felge und schlauchlosem, wulstlosem Luftreifen bekannt, bei dem die radial äußere Mantelfläche der Felge mit Notlaufstützflächen ausgebildet ist. Der wulstlose Fahrzeugluftreifen ist an der radial innenliegenden Mantelfläche der Felge anvulkanisiert. Die wulstfreie Ausbildung des Fahrzeugluftreifens ermöglicht bei einem solchen Reifen die Ausbildung der Notlaufstützflächen unabhängig von Wulstdurchmessern. Zur Ausbildung der Notlaufstützflächen können bei einem derartigen Fahrzeugluftreifen für den Notlauf wichtige Parameter besser berücksichtigt werden, so daß auch zur Notlaufeigenschaftsoptimierung gewünschte größere Durchmesser der Notlaufstützflächen einfach realisiert werden können. Allerdings können solche Fahrzeugluftreifen nicht ohne weiteres zerstörungsfrei demontiert oder gewechselt werden.

In der DE-OS 2364274 wurde vorgeschlagen, einen Fahrzeugluftreifen mit seinem Wülsten zwischen zwei radial voneinander beabstandete Felgenteile einer mehrteiligen Felge radial einzuklemmen. Der Wulstkern ist dehnbar, sodaß der Wulst über das an dem radial äußeren Felgenteil ausgebildeten nach radial innen gerichteten Felgenhorn besser montiert und bei Innendruck des Reifens unter Dehnung entlang der konischen Stützfläche des radial inneren Felgenteiles aufgespreizt werden kann. Die DE-OS-2364274 beschäftigt sich nicht mit Notlauf. Zwischen den Felgenteilen hat der Wulst großes axiales Spiel. Besonders im Falle des Druckluftverlustes ist nicht auszuschließen, daß der Wulstkern axial verrutscht und sogar zwischen den Felgenteilen axial herausrutscht. Sicherer Notlaufeigenschaften sind mit einer derartigen Ausbildung nicht gewährleistet.

Aus der US 1,932,191 ist es bekannt, seitlich in einer Felge einen flexiblen Wulst eines Fahrzeugluftreifen mithilfe eines flexiblen, nicht metallischen zwischen Felge und Wulst ausgebildeten Klemmrings, in einer Umfangsrille zu befestigen. Der flexible Wulst ist mit einem Kern aus Leinentuch oder Korden verstärkt. Der Wulst ist zwar flexibel, aber aufgrund der Steifigkeit in Umfangsrichtung mit unveranderlicher Umfangslänge ausgebildet. Der Wulst kann somit zur Montage verbogen werden. Notlauf oder Notlaufprobleme sind der US 1,932,191 nicht zu entnehmen. Die beiden Stirnseiten des Wulstes verlaufen über einen weiten radialen Erstreckungsbereich in rein radialer Richtung und scheinen in Berührkontakt zu entsprechend radial ausgebildeten Berührflächen der Umfangsrille zu stehen. Die Montage setzt dabei exakte axiale Vorpositionierung des Wulstes in der Umfangsrille voraus. In diesem Zustand muß der Wulst radial nach außen unter Beibehaltung der axialen Position verschoben werden. Dies setzt axiales Spiel nach beiden Seiten voraus. Ein derartiges axiales Spiel führt jedoch zu großen Ungenauigkeiten in der Befestigunsposition und somit in der Befestigung des Reifens. Insgesamt scheint die Montage sehr aufwendige Vorarbeiten vorauszusetzen. Trotz hohem Aufwand besteht die Gefahr, daß der Wulst nur sehr undefiniert und mit großen Ungenauigkeiten in der Umfangsrille positioniert wird.

Fertigungsbedingt nicht vollständig auszuschließende geringfügige Ungleichförmigkeiten in der Gummimaterialverteilung im Wulstbereich können in der Umfangsrille zu Deformationen des flexiblen Kerns und somit zu Ungleichförmigkeiten im Sitz des Reifens auf der Felge bzw hierdurch bedingt zu Rundlaufproblemen des Reifens führen.

Der Erfindung liegt die Aufgabe zugrunde ein Fahrzeugrad mit ― insbesondere einteiliger - Felge und schlauchlosem Luftreifen, das für Notlauf geeignet ist zu schaffen, bei dem der Reifen einfach und funktionssicher für Normalbetrieb und Notlauf zerstörungsfrei auf der Felge montiertwerden kann.

Die Aufgabe wird erfindungsgemäß durch die Ausbildung eines Fahrzeugrades gemäß den Merkmalen des Anspruchs 1 gelöst.

Zur Befestigung des Reifens auf der Felge wird der Wulst in die Ringkammer axial durch die Durchgangsöffnung eingeführt und kann dort aufgrund der konischen Erweiterung einfach und positionssicher in seine Betriebsposition in der Ringkammer geführt werden. Der Füllring wird radial innerhalb des Wulstes axial in die Ringkammer eingeführt. Der Wulst ist ist dann in der Ringkammer auf der radialen Außenseite des Füllrings radial fest gelagert und formschlüssig nach radial außen, nach axial innen und nach axial außen zur Ringkammer ausgebildet, sodaß der Wulst nach radial außen, nach axial außen, nach axial innen und über den Füllring nach radial innen formschlüssig mit der einstückig ausgebildeten Ringkammer verbunden.
Während des Fahrzeugradbetriebes besteht sowohl im Normal- als auch im Notlaufbetrieb nach Druckluftverlust ein sicherer Formschluß nach axial außen und innen und nach radial außen und innen zwischen einstückiger Ringkammer der Felge und Wulst. Sowohl die axialen als auch die radial auf den Wulst wirkenden Kräfte werden somit sicher in die im Befestigungsbereich einstückige Felge eingeleitet. Auf diese Weise kann der Wulst sogar im Notlaufbetrieb sicher und zuverlässig seine Betriebsposition in der Ringkammer beibehalten. Dadurch, daß die radial äußere zur radial äußeren Ringkammerwand hin gerichtete Seite des Wulstes zumindest im Betriebszustand des Fahrzeugrades nach radial außen mit formschlüssigem Berührkontakt zur radial äußeren Ringkammerwand angeordnet ist und daß in einem Teilbereich zwischen radial äußerer zur radial äußeren Ringkammerwand hin gerichteter Seite des Wulstes und radial äußeren Ringkammerwand ein radialer Spaltbereich ausgebildet ist, in dem sich Wulst und Ringkammerwand im Betrieb nicht berühren, wird es ermöglicht, daß die Lage des Wulstes in der Ringkammer durch Formschluß in radialer Richtung nach radial außen zur radial äußeren Ringkammerwand sehr genau definiert werden kann und im Falle von überschüssigem Kautschukmaterial im Bereich des Wulstes dieses nach Einfügen des Füllrings in die hierfür vorgesehenen radialen Aufnahmespaltbereiche eindringen kann, sodaß die Rundlaufeigenschaften durch solch überschüssiges Material nicht beeinflußt werden. Sicherer Sitz und zuverlässige Kraftübertragung ist hiermit bei hoher Rundlaufgenauigkeit im Normalbetrieb und bei Notlauf gewährleistbar.

Besonders sicher ist die Krafteinleitung vom Wulst in die Felge, wenn der Wulst über seine ganze axiale Erstreckung nach radial innen vollständig auf dem Füllring aufliegt. Wenn der Wulst und der Füllring die Ringkammer vollständig ausfüllen, wird ein besonders zuverlässiger Formschluss zwischen Wulst und Felge erzielt.

Die Ausbildung mit einem Wulst, der zumindest im Zustand der Montage bzw der Demontage des Fahrzeugrades an der nach axial innen zur axial inneren Ringkammerwand gerichteten Seite der Verdickung von axial innen nach axial außen hin konisch erweitert mit einem Steigungswinkel α zur Radialen ausgebildet ist, wobei a ein spitzer Winkel ist, ermöglicht nicht nur eine einfache und funktionssichere Montage, sondern auch eine einfache, sichere Demontage. Die Demontage kann hierdurch selbst nach längerem Betriebszustand durch einfaches Herausziehen des Wulstes aus seiner Betriebsposition in der Ringkammer erfolgen.

Bevorzugt ist die Ausbildung gemäß den Merkmalen von Anspruch 3. Der in seiner Umfangslänge ― insbesondere elastisch ― veränderbare Wulstkern ermöglicht die Montage des Wulstes durch Bewegung über die Notlaufstützfläche mit einem größeren Wulstkerndurchmesser als im befestigten Betriebszustand des Wulstes und zur Bewegung über das Felgenhorn mit einem kleineren Wulstkerndurchmesser als im befestigten Betriebszustand, sodaß die Ausbildung der Notlaufstützflächen nicht mehr in Abhängigkeit vom Durchmesser des Wulstkerns im Betriebszustand und vom inneren Felgenhorndurchmesser, sondern in erster Linie optimalen Notlaufeigenschaften entsprechend ausgebildet werden kann. Der in seiner Umfangslänge veränderbare Wulst kann somit in einfacher und funktionssicherer Weise sowohl montiert als auch demontiert werden wobei sowohl die Notlaufstüzflächen für den Notlauf optimiert als auch das Felgenhorn hinsichtlich der axialen Stütze für den Wulst und der Wulstkern in seinem Betriebszustand hinsichtlich seiner Eigenschaften im Betriebszustand optimiert werden können.

Durch Ausbildung des Fahrzeugluftreifens mit elastisch veränderbarer Umfangslänge des Wulstes ist besonders einfach und sicher eine Umfangslängenveränderung von einer ersten Umfangslänge zu individuell entsprechend den jeweiligen Erfordernissen geänderten weiteren Umfangslängen entgegen der Wirkung rückstellender Kräfte und wieder zurück in die erste Umfangslänge unter Ausnützung der rückstellenden Kräfte erzielbar.

Bevorzugt ist die Ausbildung gemäß den Merkmalen von Anspruch 4, wobei für a gilt: 2°≤α≤15°, insbesondere 5°≤α≤10°. Hierdurch wird trotz geringem Raumaufwand ein einfaches sicheres Befestigen des Wulstes in der Betriebsposition inder Ringkammer bzw Lösen aus seiner Betriebsposition in der Ringkammer ermöglicht.

Besonders vorteilhaft ist die Ausbildung gemäß den Merkmalen des Anspruchs 5, wobei der Wulst zumindest im Zustand der Montage bzw der Demontage und im Betriebszustand des Fahrzeugrades an der nach axial außen zur axial äußeren Ringkammerwand gerichteten Seite der Verdickung von axial innen nach axial außen hin konisch verjüngt mit einem Steigungswinkel β zur Radialen ausgebildet ist und zumindest im Bereich dieser Steigung formschlüssig an der korrespondierend ausgebildeten axial äußeren Ringkammerwand anliegt, wobei β ein spitzer Winkel ist. Hierdurch wird eine einfache und dennoch paßgenaue Montage des Reifens auf der Felge und ein einfaches Lösen der Verbindung zur Demontage noch sicherer gewährleistbar. Bevorzugt ist die Ausbildung gemäß den Merkmalen von Anspruch 5,wobei für β gilt:0°< β≤5°,insbesondere2°≤ β ≤3.Hierdurch ist der Winkel ausreichend klein, um eine sichere axiale Krafteinleitung aus dem Wulst in das Felgenhorn im Betrieb zu gewährleisten, und dennoch groß genug, um besonders einfach und sicher bei geringem Raumaufwand Montage und Demontage zu gewährleisten.

Bevorzugt wegen der einfachen zuverlässigen Montierbarkeit bzw Demontierbarkeit bei hoher Betriebssicherheit ist die Ausbildung gemäß den Merkmalen von Anspruch 7.

Die Ausbildung gemäß den Merkmalen des Anspruchs 8 ermöglicht eine besonders einfache und zuverlässige Montage und Demontage des Fahrzeugluftreifens auf der Felge. Nachdem der Wulst in seine Befestigungsposition in der Ringkammer eingeführt worden ist, wird er durch einfaches axiales Verschieben des Füllrings auf der hierzu ausgebildeten Lagerfläche der Ringkammer in seine Füllposition in der Ringkammer geschoben, wodurch der Formschluß des Wulstes in der Ringkammer hergestellt und gesichert wird. Durch einfaches axiales Herausziehen des Füllrings aus seiner Füllposition wird der Formschluß aufgehoben, so daß der Wulst aus der Ringkammer entfernt und der Fahrzeugluftreifen von der Felge demontiert werden kann. Die zylindrische Ausbildung stellt darüber hinaus zusätzlich sicher, daß die Gefahr von unbeabsichtigtem Lösen des Füllrings aus der Ringkammer aufgrund von ungewünscht eingeleiteten axialen Kräften vom Reifenwulst in den Füllring zuverlässig minimiert wird.

Die Ausbildung gemäß den Merkmalen von Anspruch 9 wird es ermöglicht, daß überschüssiges Kautschukmaterial zusätzlich im Bereich des Wulstes nach Einfügen des Füllrings in die Ringkammer in die hierfür gerade auf der Seite des Wulstes, auf der im Laufe des Betriebes besonders geringe Belastungen auftreten, ausgebildeten Aufnahmespaltbereiche eindringen kann, sodaß die Rundlaufgenauigkeit durch solch überschüssiges Material noch zuverlässiger nicht beeinflußt werden. Sicherer Sitz und zuverlässige Kraftübertragung ist hiermit bei hoher Rundlaufgenauigkeit im Normalbetrieb und bei Notlauf besonders zuverlässig gewährleistbar.

Bevorzugt ist die Ausbildung gemäß den Merkmalen von Anspruch 10, wodurch die Lage des Wulstes in der Ringkammer durch Formschluß in axialer Richtung nach axial innen zur axial inneren Ringkammerwand auch im individuellen Einzelfall nicht auszuschließenden stärkeren in den Wulst eingeleiteten axial nach innen gerichteten Krafte definiert aufrechterhalten werden kann. Die Ausbildung gemäß den Merkmalen des Anspruchs 11 ermöglicht eine besonders einfache Demontage. Der Spaltbereich ermöglicht es, daß nach Entfernen des Füllrings ein der Wulst axial hintergriffen werden kann, sodaß die axial nach innen gerichtete Seite eine Angriffstelle zum Herausziehen des Wulstes aus der Kammer bietet. Auf diese Weise kann auch nach längerer Betriebszeit des Fahrzeugrades, der Fahrzeugreifen besonders einfach demontiert werden. Durch Ausbildung gemäß den Merkmalen von Anspruch 12 kann Raum zur Aufnahme von überschüssigem Materiel über die gesamte radiale Erstreckung des Wulstes geschaffen werden. Gleichzeitig kann die Demontage noch leichter gemacht werden.

Besonders vorteilhaft hinsichtlich der Montierbarkeit ist die Ausbildung gemäß den Merkmalen von Anspruch 13, wobei die radial äußere zur radial äußeren Ringkammerwand hin gerichtete Seite des Wulstes zumindest im Betriebszustand des Fahrzeugrades nach radial außen mit formschlüssigem Berührkontakt zur radial äußeren Ringkammerwand angeordnet ist, wobei in einem Teilbereich zwischen radial äußerer zur radial äußeren Ringkammerwand hin gerichteter Seite des Wulstes und radial äußeren Ringkammerwand ein radialer Spaltbereich ausgebildet ist, in dem sich Wulst und Ringkammerwand im Betrieb nicht berühren, wobei zumindest in einem Teilbereich zwischen axial innerer zur axial inneren Ringkammerwand hin gerichteter Seite des Wulstes und axial innerer Ringkammerwand ein axialer Spaltbereich ausgebildet ist, in dem sich Wulst und Ringkammerwand im Betrieb nicht berühren, und wobei der radiale Spaltbereich und der axiale Spaltbereich ineinander übergehen. Hierdurch wird trotz besonders sicherer Positionierung über einen weiten Bereich sowohl axial als auch radial Möglichkeit zur Aufnahme von überschüssigem Material geschaffen. Bevorzugt ist die Ausbildung gemäß den Merkmalen von Anspruch 14. Zur Montage des Wulstes in seiner Betriebsposition in der Ringkammer, wird der Wulst zunächst in die Ringkammer eingeführt und dort in den Spaltbereich. Hierdurch ergibt sich zum Einführen des Füllrings in seine Sitzposition in der Kammer zwischen Füllring und Wulst geringfügig erhöhtes Spiel, das jedoch das Einschieben des Füllrings in die Sitzposition in der Kammer erleichtert. Beim Befüllen des Fahrzeugrades mit Luft bewirken die aufgrund des Innendruckes im Fahrzeugrades auf den Reifenwulst einwirkenden in Richtung der Ringkammeröffnung gerichteten Zugkräfte, daß der Wulst in aus dem Spaltbereich unter Freigabe des Spaltbereichs selbständig in seine Betriebsposition wandert. Hierdurch kann trotz definierter Positionierung des Wulstes im Betriebszustand mit einfachen Mitteln sowohl mögliches überschüssiges Material im Spaltbereich aufgenommen und auch eine sichere, einfache Montage des Füllrings in der Ringkammer ermöglicht werden.

Bevorzugt ist die Ausbildung gemäß den Merkmalen von Anspruch 15 zur Erzielung besonders guter Notlaufeigenschaften, da der Laufstreifen trotz optimaler Abstandsbreite der zwischen den Reifenwülsten des Fahrzeugluftreifens gerade in den besonders kritischen Schulterbereichen ausreichend gestützt werden kann. Besonders vorteilhaft ist es, zur Stützung der im Notlauf besonders kritischen Schulterbereiche auf den axialen Seitenbereichen der radial äußeren Mantelfläche der Felge jeweils eine Notlaufstützfläche auszubilden.

Besonders vorteilhaft ist eine Ausbildung des Fahrzeugrades, bei dem der Wulstkern ein im Wulst integriert ausgebildeter Gummikern ist. Der Gummikern ist einfach herzustellen und kann besonders einfach und zuverlässig im Wulst verankert werden. Der Wulst kann hierdurch in einfacher, zuverlässiger Weise in seiner Umfangslänge elastisch dehnbar ausgebildet werden. Für einen besonders sicheren Sitz ist der Gummikern mit einer Shore - A- Härte aus dem Bereich von 80 bis 100 - bevorzugt aus dem Bereich zwischen 85 bis 90 ― ausgebildet.

In einer anderen Ausbildungsform des Fahrzeugrades ist der Wulst vollständig kernlos ausgebildet. Der Wulst ist besonders einfach ohne zusätzlichen Aufwand für einen Kern herzustellen, ist durch sein kernloses Gummimaterial in seiner Umfangslänge ausreichend elastisch dehnbar auszubilden und kann dennoch sicher und zuverlässig durch den Formschluß in der Ringkammer verankert werden.

Bevorzugt ist das Fahrzeugrad derart ausgebildet, daß die axial äußere Stirnfläche als eine axiale Auflagefläche zur axialen Stütze der unteren Reifenseitenwand ausgebildet ist. Auf diese Weise ist der Reifen bei Kurvenfahrten im unteren Seitenwandbereich zur Erzielung guter Handlingeigenschaften axial gestützt und kann bei besonderen Stoßbelastungen unter Aufhebung der axialen Stützwirkung bis in den unteren Seitenwandbereich zur Erzielung guter Komforteigenschaften einfedern.

Durch die Ausbildung eines Fahrzeugrades, bei dem der größte Außendurchmesser der Notlaufstützflächen um einen Faktor zwischen 1,05 und 1,3 größer als der Innenringdurchmesser des Wulstkerns im montierten Zustand des Fahrzeugrades beträgt, ermöglicht optimale Notlaufeigenschaften durch besonders großen Außendurchmesser der Notlaufstützflächen bei Beibehaltung der zur Erzielung guter Einfederung des Reifens und somit guter Komforteigenschaften optimaler kleiner Innenringdurchmesser des Wulstkerns. Die Ausbildung eines Fahrzeugrades, bei dem der größte Außendurchmesser der Notlaufstützflächen um einen Faktor zwischen 1,1 und 1,2 größer als der Innenringdurchmesser des Wulstkerns im montierten Zustand des Fahrzeugrades beträgt, stellt einen opimale Ausbildungsbereich der Standardreifendimensionen zur Lösung der Zielkonflikte zwischen gute Notlaufeigenschften einerseits und Komfort und Gewicht des Fahrzeugrades andererseits dar.

Die Ausbildung eines Fahrzeugrades, bei dem der Wulstkern eine Dehnbarkeit und/oder Stauchbarkeit von 5 bis 30 % aufweist, ermöglicht eine einfache und zuverlässige Montage trotz optimaler Notlaufeigenschaften durch Ausbildung besonders großer Außendurchmesser der Notlaufstützflächen trotz Beibehaltung der Ausbildung der Erzielung guter Einfederung des Reifens und somit guter Komforteigenschaften durch optimal kleine Innenringdurchmesser des Wulstkerns. Durch einfaches ― insbesondere elastisches - Dehnen und/oder Stauchen des Wulstes wird der Wulst jeweils auf den zur Montage bzw zur Demontage über die Notlaufstützflächen erforderlichen optimalen Durchmesser, auf den zur Montage bzw zur Demontage über das nach innen gerichtete Felgenhorn erforderlichen optimalen Durchmesser und auf den zum sicheren Sitz in der Ringkammer erforderlichen optimalen Durchmesser eingestellt. Die Ausbildung eines Fahrzeugrades, bei dem der Wulstkern eine Dehnbarkeit und/oder Stauchbarkeit von 10 bis 20 % ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.

Bevorzugt ist die Ausbildung gemäß den Merkmalen von Anspruch 21, wonach der Wulstkern eine Dehnbarkeit von 5 bis 30 % und eine Stauchbarkeit von 1 bis 5% aufweist und wonach der Wulstkern insbesondere im montierten Zustand des Fahrzeugrades ungedehnt und ungestaucht ist. Durch einfaches ― insbesondere elastisches - Dehnen aus dem ungedehnten und ungestauchten Zustand wird der Wulstkern auf einen zur Montage bzw Demontage über die Notlaufstützfläche optimal großen Durchmesser gebracht. Durch einfaches ― insbesondere elastisches ― Stauchen aus dem ungedehnten und ungestauchten Zustand wird der Wulstkern auf einen zur Montage bzw Demontage über das nach innen gerichtete Felgenhorn optimal kleinen Durchmesser gebracht. Die Ausbildung eines Fahrzeugrades, bei dem der Wulstkern eine Dehnbarkeit 10 bis 20 % und eine Stauchbarkeit von 2,5 bis 3,5 % aufweist, ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.Besonders vorteilhaft ist es, wenn der Wulstkern im montierten Zustand des Fahrzeugrades ungedehnt und ungestaucht ist und somit in Umfangsrichtung weitgehend frei von in Umfangsrichtung wirkenden inneren Kräften ist. Besonders vorteilhaft ist hierbei die elastische dehnbare und elastisch stauchbare Ausbildung. Der Wulstkern wird aus dem ungedehnten und ungestauchten Zustand zur Montage über die Notlaufstützflächen den elastischen Rückstellkräften entgegenwirkend in Umfangsrichtung gedehnt. Nach der Montage über die Notlaufstützflächen wird er duch die Rückstellkräfte wieder in seiner Umfangslänge bis in den ungedehnten und ungestauchten Zustand verkleinert. Zur Montage über das radial nach innen gerichtete Felgenhorn wird der Wulstkern aus dem ungedehnten und ungestauchten Zustand den elastischen Rückstellkräften entgegenwirkend in Umfangsrichtung gestaucht. Nach der Montage über das Felgenhorn wird er in der Ringkammer duch die Rückstellkräfte wieder in seiner Umfangslänge bis in den ungedehnten und ungestauchten Zustand vergrößert. In entsprechenderweise erfolgt die Demontage.

Die Ausbildung gemäß den Merkmalen von Anspruch 23 ermöglicht eine besonders zuverlässige, einfach handhabbare Ausbildung eines Füllrings. Die im wesentlichen in Umfangsrichtung gerichteten gummierten Festigkeitsträger ― multifilamentartig oder monofilamentartig - aus Stahl oder textiler Bauart gewährleisten eine sichere, zuverlässige Beibehaltung des Sitzes des Füllrings auf der Lagerfläche in der Ringkammer und ausreichend Elastizität zur axialen Montage und Demontage. Besonders einfach herzustellen ist die Ausbildung des Füllrings aus einem um die Achse des Füllrings wendelförmig gespulten, kontinuierlichen Festigkeitsträgers.

Die Erfindung wird im folgenden anhand der in den Figuren 1 bis 5 dargestellten Ausführungsbeispiele näher erläutert. Hierin zeigen
- Fig. 1: eine Querschnittsdarstellung eines erfindungsgemäßen Fahrzeugrades mit montiertem Fahrzeugreifen,
- Fig. 2: Querschnittsdarstellungen von Ausführungsformen des Füllrings,
- Fig. 3: Querschnittsdarstellungen von Ausführungsformen des Wulstbereichs,
- Fig.4: schematische Darstellung zur Erläuterung der Montage und der Demontage,
- Fig.5: Ausführungsformen der Wulstbefestigung mit Spaltbereichen

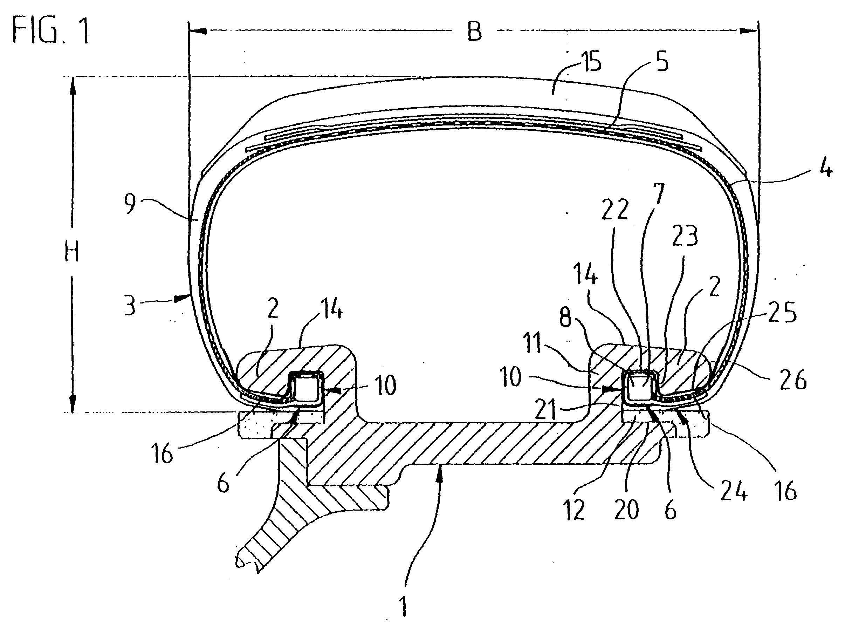

Fig. 1 zeigt ein Fahrzeugrad mit Fahrzeugluftreifen 3 und Felge 1 mit einem Verhältnis von maximaler Höhe H zu maximaler Breite B des Fahrzeugluftreifens H/B ≤ 0,6. Der Fahrzeugluftreifen 3 weist eine über den Umfang des Reifens und vom linken Wulstbereich 6 des Fahrzeugluftreifens zum rechten Wulstbereich 6 reichende, nicht näher dargestellte, Innenschicht auf, über die eine Karkasse 4 radialer Bauart mit beispielsweise einer oder zwei Karkassenlagen aufgebaut ist. Im Bereich der Lauffläche ist radial außerhalb der Karkasse 4 ein Gürtel 5 bekannter Bauart mit beispielsweise zwei Gürtellagen aus in Kautschuk eingebetteten Festigkeitsträgern, z.B. aus Stahlcord, aufgelegt. Der Gürtel reicht über den gesamten Umfang des Reifens hinweg und erstreckt sich in axialer Richtung von einem Reifenschulterbereich in den anderen.

Die Stahlcorde verlaufen im spitzen Winkel von beispielsweise 10-30 ° zur Umfangsrichtung. Radial außerhalb der Gürtellagen ist es denkbar, eine nicht dargestellte Gürtelbandage mit im wesentlichen zur Umfangsrichtung verlaufenden Festigkeitsträgern, beispielsweise aus Nylon, aufzuwickeln.

Radial außerhalb des Gürtels bzw. der Gürtelbandage ist in bekannter Weise ein über den Umfang des Reifens reichender und sich von Schulterbereich zu Schulterbereich erstreckender Laufstreifen 15 aus Kautschukmaterial aufgelegt. Im Seitenwandbereich 9 ist Kautschukmaterial auf die Karkasse 4 aufgelegt. Das Seitenwandkautschukmaterial reicht vom Schulterbereich bis zum Wulstbereich 6.

Die einstückig ausgebildete Felge 1 ist an ihren beiden axialen Stirnseiten jeweils mit einer konzentrisch zur Felge angeordneten Ringkammer 10 mit einer radial inneren Ringkammerwand 20, einer axial inneren Ringkammerwand 21, einer radial äußeren Ringkammerwand 22 und einer axial äußeren Ringkammerwand 23 einstückig ausgebildet. Die Ringkammerwand 23 begrenzt das radial nach innen gerichtete Felgenhorn 2. Axial nach innen zwischen Felgenhorn 2 und radial innerer Ringkammerwand 20 ist eine ringförmige Durchgangsöffnung 24 von axial außen zur Ringkammer hin ausgebildet. Das Felgenhorn 2 ist an seiner radial nach innen gerichteten Seite 25 von axial innen nach axial außen konisch erweitert und an seiner Stirnfläche 26 gekrümmt ausgebildet. Auf der radial äußeren Seite des Felgenhorn erstreckt sich ein Notlaufsattel 11 mit seiner Notlaufsatteloberfläche 14 nach axial innen über die Position der Ringkammer 10 hinweg. Jede Notlaufsatteloberfläche erstreckt sich soweit nach axial innen, daß der Gürtel in seinen axialen Randzonen von der Schulter jeweils mit 10 bis 30 %, beispielsweise 25%, axial überdeckt ist.

Der Fahrzeugluftreifen 3 umgreift mit seinen unteren Seitenwandbereichen 16 die nach radial innen erstreckten Hörner 2. Die Krümmung der Stirnfläche 6 des Horns entspricht der gewünschten Reifenkontur im Bereich des Horns.

Am Ende des unteren Seitenwandbereiches 16 ist jeweils der Wulstbereich 6 mit zur Innenseite des Reifens ausgebildeter wulstartiger Verdickung 7 ausgebildet. Der Wulst ist mit einem in das Karkassenlagenende eingebetteten elastisch dehnbaren und elastisch stauchbaren Kern 8 ausgebildet. Im montierten Zustand gemäß Fig. 1 füllt der Wulstbereich 6 unter Formschluß zur axial inneren Ringkammerwand 21 und zur radial äußeren Ringkammerwand 22 sowie zur axial äußeren Ringkammerwand 23 ca. 1/2 bis 2/3 des Ringkammerraums. Radial innerhalb des Wulstes ist ein Füllring 12 radial formschlüssig zum Wulstbereich 6 nach radial außen und nach radial innen zur radial inneren Ringkammerwand 20 ausgebildet, der sich in axialer Richtung von der Ringkammerwand 10 über die gesamte axiale Erstreckung des Wulstbereichs 6 durch die Ringöffnung 24 hindurch nach axial außen erstreckt. Der Füllring 12 ist über den gesamten axialen Erstreckungsbereich der Ringkammer und somit des Wulstes an seiner radial äußeren Mantelfläche und auch axial außerhalb der Ringkammer zylindrisch ausgebildet. In der Ausführung von Fig.1 erstreckt sich der Füllring 12 in axialer Richtung bis hin zur axialen Position der Stirnseite 26 des Felgenhorns. Der Wulst steht in der Ausführung gemäß Fig. 1 unter Formschluß nach radial außen, nach axial innen und nach axial außen zu den geschlossenen Ringkammerwänden 22, 23, 21 und durch den radialen Formschluß zum Füllring 12, der seinerseits in radialem Formschluß zur geschlossenen Ringkammerwand 20 ausgebildet ist, auch zur Ringkammerwand 20 in radialem Formschluß. Da der Wulst auf seiner gesamten Oberfläche in formschlüssigem Berührkontakt zur einstückig ausgebildeten Ringkammer bzw. zum Füllring 12 und der Füllring 12 innerhalb der Rinkammer seinerseits mit seiner Oberfläche in vollständigem Berührkontakt zu den Ringkammerwänden bzw. zum Wulst ausgebildet ist, ist die Ringkammer vollständig von Wulst und Füllring ausgefüllt. Darüber hinaus steht der untere Seitenwandbereich 16 mit der radial inneren konischen Felgenhornseite 25 auch im axialen Erstreckungsbereich des Felgenhorns in vollständigem Berührkontakt.

Der vollständige Formschluß des Wulstes zur Feige sichert den Sitz des Reifens auf der Felge während des Fahrens.

Im Bereich der Stirnfläche 26 des Horns 2 der Felge liegt die Reifenseitenwand jeweils lediglich unter Vorspannung an.

Bei Auflage eines Umfangselementes des Reifens auf die Straßenoberfläche wirken resultierende Normalkräfte F zwischen Fahrzeugluftreifen und Straßenoberfläche. Bei der Eindämpfung dieser Kräfte wirkt auf die Seitenwände 9 des Reifens eine resultierende Kraft F_{A}, die im wesentlichen in axialer Richtung wirkt und die Seitenwand leicht weiter verkrümmt. Aufgrund der gewählten Vorspannung zwischen Stirnfläche 26 und Reifen liegt der Reifen in diesem Normallastfall unter Reduzierung der Vorspannung immer noch an der Stirnfläche 26 an. Bei Kurvenfahrten wird im Bereich der besonders stark belasteten Kurvenaußenseite aufgrund der eingeleiteten Kräfte die Vorspannung zwischen Stirnfläche 26 und Reifenseitenwand erhöht. Der Fahrzeugluftreifen 3 wird somit an der besonders stark belasteten Seite durch das Horn versteift. Ein sicheres Handling ist gewährleistet.

Bei starken Stoßwirkungen auf den Reifen wirken stärkere resultierende Kräfte F_{A} auf die Reifenseitenwände. Diese beulen weiter nach axial außen bei der Eindämpfung aus. Der für die flexible Krümmung der Seitenwand hierzu zur Verfügung stehende Seitenwandbereich reicht dabei vom Schulterbereich des Laufstreifens bis über den gesamten gekrümmten Bereich der Stirnfläche 26. Bei starken Stößen hebt die Reifenseitenwand 9 im Bereich der Stirnfläche 26 unter Bildung eines Spaltes zwischen Stirnfläche 26 und Reifenseitenwand ab.

Auch besonders starke auf den Reifen einwirkende Stöße können aufgrund des großen Krümmungsradius R und der sehr langen für die Krümmung zur Verfügung stehenden Bogenlänge der Reifenseitenwand zwischen Reifenschulter und zylindrischer Felgenoberfläche unter geringer Flächenbeanspruchung der gekrümmten Seitenwandoberflächen sicher eingedämpft werden.

Der nach axial innen reichende Notlaufsattel 11 erstreckt sich über den gesamten Umfangsbereich des Reifens. Bei plötzlichem Innendruckverlust stützt sich der Reifen mit seinem Laufstreifenbereich auf den beiderseitig vorgesehenen, mit im wesentlichen zylindrischer oder nach axial innen mit leicht konisch erweiterter Oberfläche mit einem Steigungswinkel von 0 bis 10° zur Achsrichtung ausgebildeten Notlaufsattel 11 ab. Frühzeitige Zerstörung und Ablösung des Reifens werden vermieden.

Ebenso ist es denkbar, die radial äußere Oberfläche der Notlaufstützflächen mit zusätzlichem Stützmaterial zu belegen. Das zusätzliche Stützmaterial ist aus hartem Kunststoff, Gummi oder Kunststoffschaum ausgebildet, das zur Dämpfung unempfindlich gegen Stöße ist und das gute Gleiteigenschaften für den Notlauf aufweist.

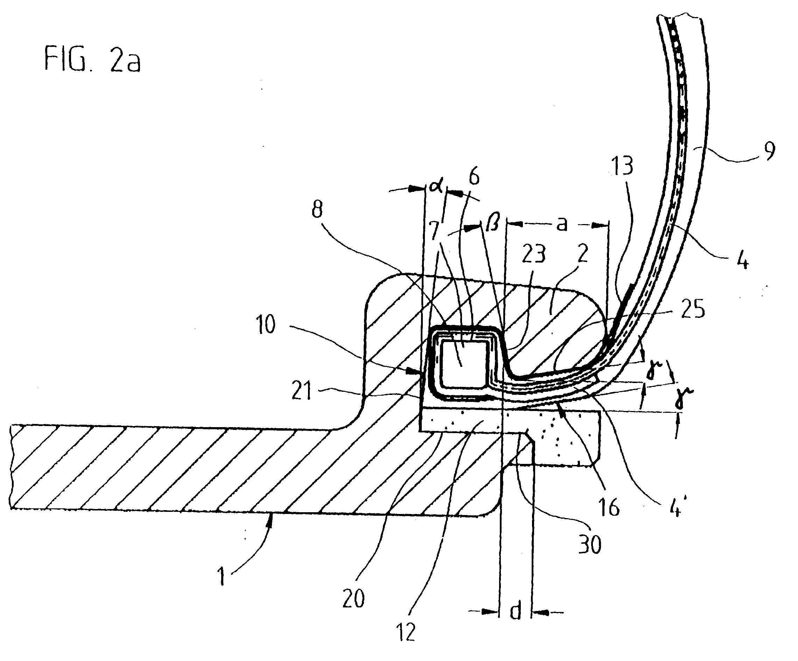

Fig. 2a zeigt eine vergrößerte Detaildarstellung des äußeren Randbereichs der Felge von Fig.1. in Fig.2a ist erkennbar, daß sich die Innenseite 25 des Felgenhorns von der Ringkammerwand 23 ausgehend unter Einschluß eines Winkels γ zur Radachse nach axial außen hin bis zur gekrümmten Stirnfläche 26 des Felgenhorns 2 konisch erweitert. Die radial äußere Mantelfläche des Füllrings 12 ist von der Ringkammerwand 21 ausgehend über den gesamten axialen Erstreckungsbereich der Ringkammer hinweg bis zur Ringkammerwand 23 und in ihrer axialer Verlängerung aus der Ringkammer zylindrisch ausgebildet. Der Füllring erstreckt sich ebenso wie das Felgenhorn noch über einen Abstand a von der Ringkammerwand 23 axial nach außen. Der Füllring 12 ist axial verschiebbar auf einer zylindrischen Lagerfläche 30 der Felge gelagert. Im Innern der Ringkammer bildet die Lagerfläche 30 die radial innere Ringkammerwand 20. Nach axial außen erstreckt sich die Lagerfläche 30 bis in einen Abstand d von der Ringkammerwand 23. Axial außerhalb des Abstandes d ist der Füllring nach radial innen zu einer Schulter verdickt ausgebildet und liegt mit dieser an einer korrespondierend ausgebildeten Schulter der Felge an. Die Abstände a,d sind so gewählt, daß a größer als d ist. Der Wulst ist mit einem trapezförmigen Querschnitt ausgebildet. Er ist mit seiner radial äußeren zur radial äußeren Ringkammerwand 22 hin ausgebildeten Mantelfläche und mit seiner radial inneren im Betriebszustand auf dem Füllring 12 aufliegenden Mantelfläche im wesentlichen zylindrisch ausgebildet. Der Wulst ist mit an der nach axial innen zur axial inneren Ringkammerwand 21 hin gerichteten Seite der Verdickung von axial innen nach axial außen hin konisch erweiterter Stirnseite mit einem Steigungswinkel α zur Radialen, wobei a ein spitzer Winkel ist, und mit an der nach axial außen zur axial äußeren Ringkammerwand 23 hin gerichteten Seite der Verdickung von axial innen nach axial außen hin konisch verjüngter Stirnseite mit einem Steigungswinkel β zur Radialen, wobei β ein spitzer Winkel ist, ausgebildet. Die beiden Ringkammmerwände 21 und 23 sind korrespondierend zu den zu ihnen gerichteten Wulstseiten ebenfalls mit dem Steigungswinkel α zur Radialen bzw mit dem Steigungswinkel β zur Radialen ausgebildet. Für den Winkel a gilt: 2°≤α≤ 15°, vorzugsweise 5°≤α≤ 10°. Für den Winkel β gilt: 0°< β ≤5°, vorzugsweise 2°≤ β ≤3°.
Der Winkel γ liegt zwischen 2 und 20 °. Im gezeichneten Ausführungsbeispiel liegt er bei ca. 10°. Auf diese Weise umschließen der Wulst mit seiner Verdickung 7 und der sich anschließende untere Seitenwandbereich 16 zwischen innerer Felgenhornfläche 25 und Füllring das Felgenhorn zwangsgeführt, wodurch die Verankerung des Reifens in der Felge zusätzlich gesichert wird.

Der Füllring ist aus Gummi oder aus einem elastischen Kunststoff mit selbsthemmender Oberfläche ausgebildet. Es ist auch denkbar, den Füllring aus einem nichtelastischen Kunststoff oder Metall herzustellen. Soweit im Einzelfall erforderlich, ist es auch möglich, den Füllring im montierten Zustand mit seiner Schulter an der korrespondierenden Schulter der Felge beispielsweise durch Verschraubung zusätzlich axial zu fixieren.

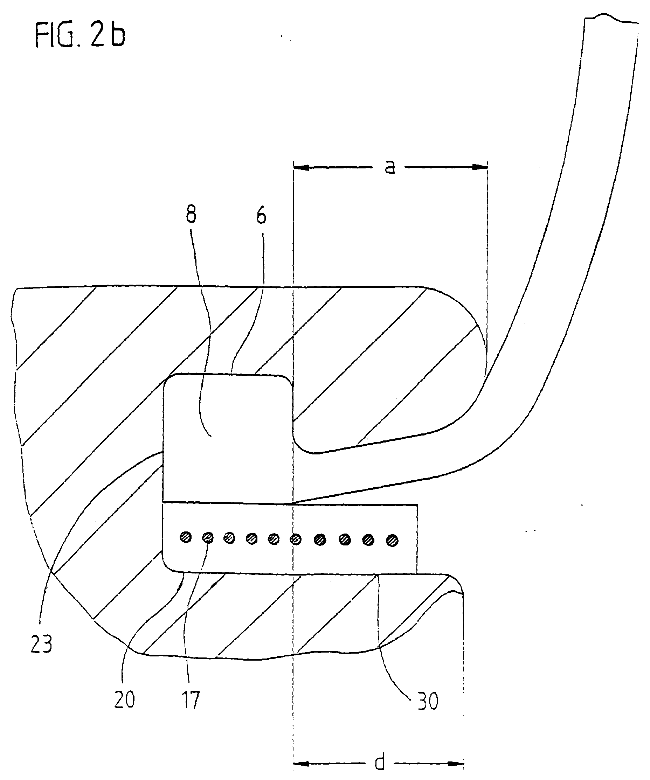

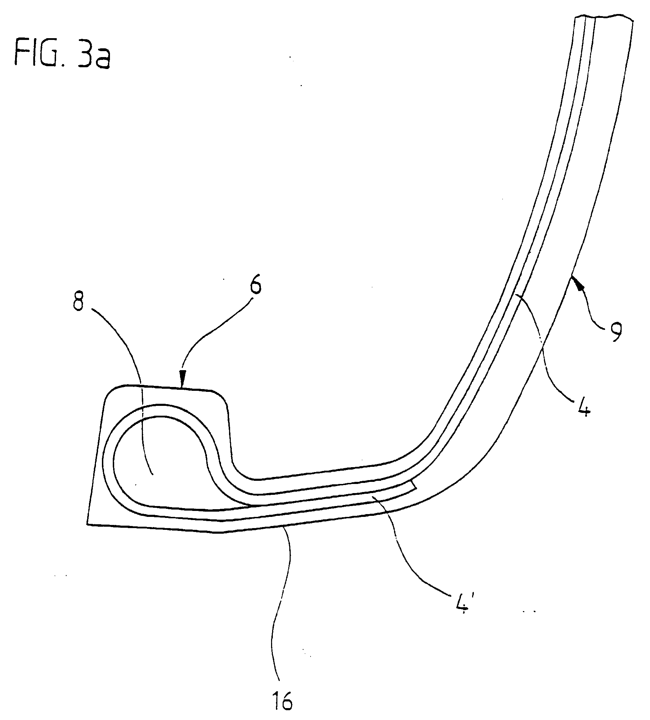

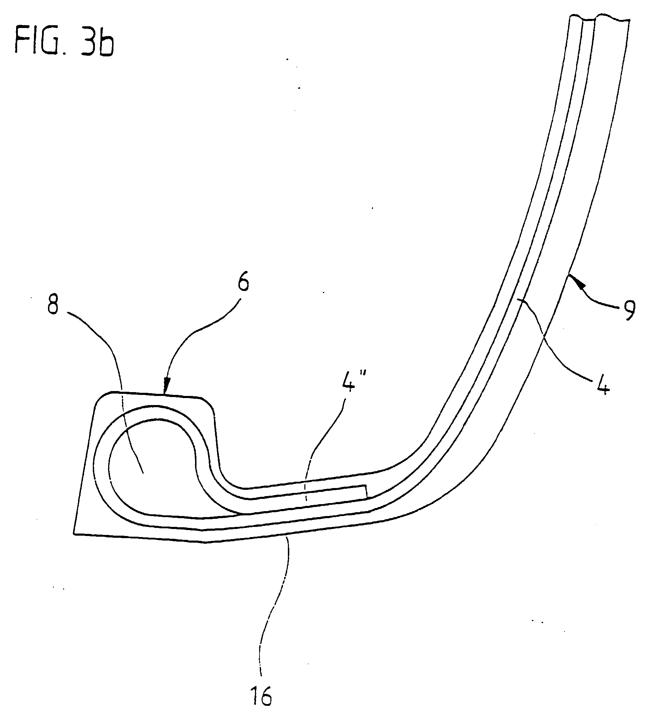

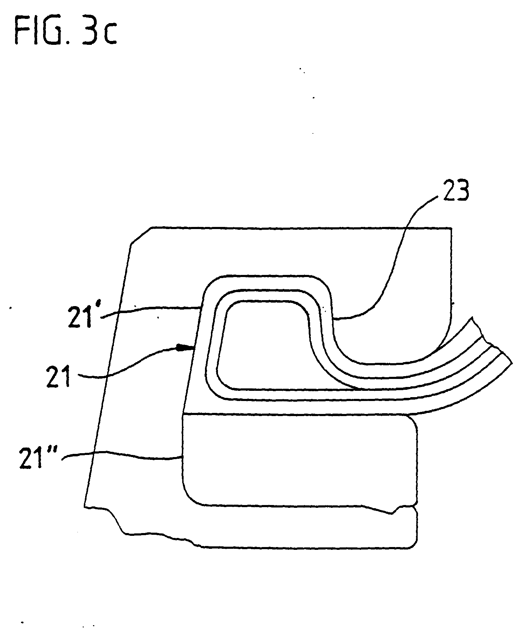

In Fig2b ist eine alternative Ausführung des Füllrings 12 dargestellt, der jedoch im elastischen Gummi- oder Kunststoffmaterial eingebettete im wesentlichen in Umfangsrichtung verlaufende Festigkeitsträger 17 enthält. Die Festigkeitsträger geben dem Füllring zusätzlichen Halt auf der Lagerfläche 30. Die Festigkeitsträger 17 können mehrere nebeneinander angeordnete in Umfangsrichtung gewickelte zugfeste Festigkeitsträger sein. In einer anderen Ausführung ist ein oder mehrere nebeneinander angeordnete Festigkeitsträger kontinuierlich wendelförmig um die Achse des Füllrings von einem axialen Ende zum anderen axialen Ende des Füllrings gewickelt. Die Abstände zwischen den benachbarten Wicklungen sind äquidistant. Soweit zur Erzielung einer noch sichereren Fixierung des Füllrings auf der Lagerfläche 30 sinnvoll, können die Abstände auch unterschiedlich gewählt sein. Die Festigkeitsträger sind Monofilamente oder Multifilamente aus Stahl. In einer anderen Ausführung sind die Festigkeitsträger textile Monofilamente oder Multifilamente. Es ist auch denkbar die Festigkeitsträger 17 aus Gewebestreifen auszubilden.
Der Wulstkern 8 wird, wie in den Fig.1,2 und 3a und 3c dargestellt ist, durch Einbettung des Kerns 8 in die Karkasse 4 durch Umschlag der Karkasse 4 um den Kern von innen nach außen oder, wie im Ausführungsbeispiel von Fig. 3b dargestellt ist, von außen nach innen verankert. Die Karkasse 4 ist eng um den Kern 8 gewickelt und der Umschlag 4*'* ist ebenso wie im anderen Ausführungsbeispiel der Umschlag 4*''* im Anschluß an den Kern 8 in unmittelbarem Kontakt zum Hauptteil der Karkasse. Der Kern 8 ist tröpfchenförmig zum Berührungspunkt zwischen Umschlag und Hauptteil der Karkasse verjüngt ausgebildet. Fig.3c zeigt eine Ausführungsform, in der der Kern 8 ebenfalls ― wie der Wulst ― trapezförmig ist. Zur Ausbildung des Kerns 8 wird ein elastisches Gummimaterial mit einer Shore-A-Härte von 80 bis 100, vorzugsweise 85 bis 90 - im Ausführungsbeispiel von Figur 1 mit einer Shore-A-Härte von 87 ― gewählt, das eine elastische Dehnbarkeit in Umfangsrichtung des Kerns von 5 bis 30%, für Standard-Reifendimensionen von 10 bis 20%, und eine elastische Stauchbarkeit von 1 bis 5%, für Standard-Reifendimensionen von 2,5 bis 3,5 Prozent, aufweist.

Der Kern wird durch Extrusion durch injection moulding oder vergleichsweise bekannte Techniken hergestellt.

Es ist auch denkbar, den Wulst kernlos auszubilden, wobei auch in diesem nichtdargestellten Ausführungsbeispiel das Gummimaterial des Wulstes so gewählt wird, daß der Wulst die genannten Dehnungs- und Stauchungseigenschaften in Umfangsrichtung aufweist.

Soweit der Abrieb zwischen Felgenhorn und unterer Seitenwand unerwünscht groß wird, ist es möglich, wie in Figur 1 und 2a beispielhaft dargestellt, zusätzlich zwischen Felgenhorn und Wulst einen zusätzlichen Streifen 13 von abriebfestem Material, beispielsweise von abriebfestem Gummi oder Kunststoff auszubilden. Der abriebfeste Streifen kann bis in die Ringkammer reichen und dort um den Wulst umgeschlagen sein.

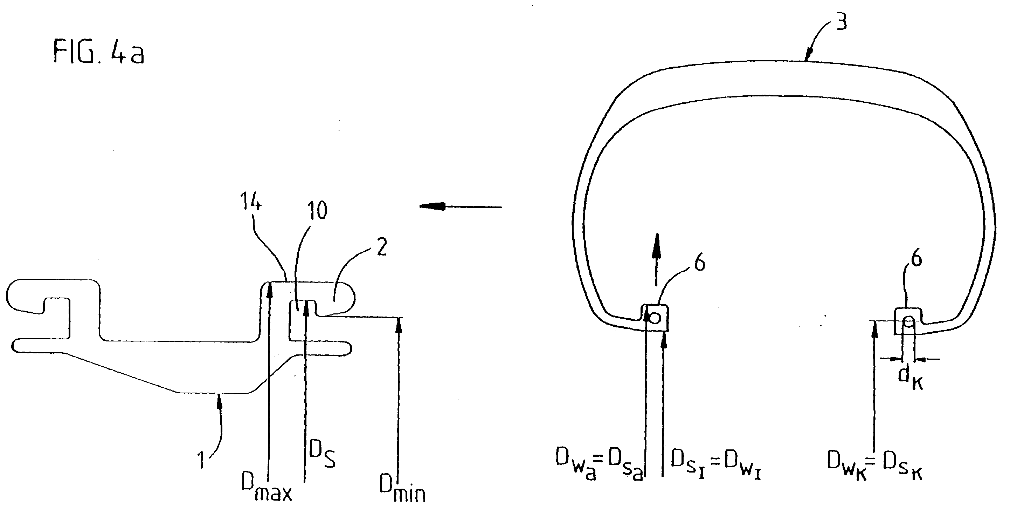

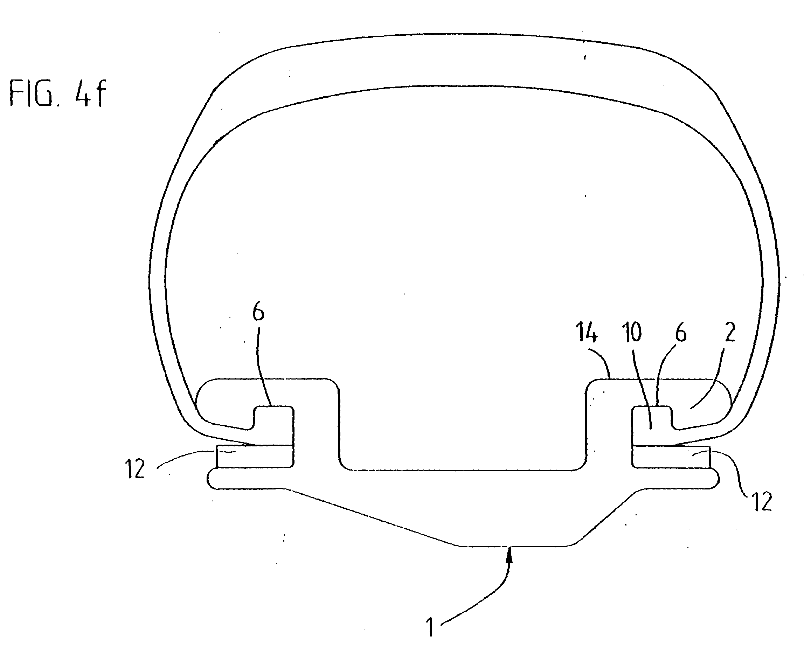

Anhand der schematischen Darstellungen der Figuren 4a bis 4e wird im Folgenden die Montage des Reifens auf einer Felge beschrieben. Die Notlaufstützflächen 14 weisen einen maximalen Außendurchmesser Dmax, die beiden Felgenhörner einen minimalen Innendurchmesser Dmin auf. Der Reifenwulst ist in Fig.4a im ungedehnten und ungestauchten Zustand. Sein Außendurchmesser Dwa entspricht dem Durchmesser der radial äußeren Ringkammerwand 22 und somit dem äußeren Durchmesser des Wulstes Dsa in dessen Sitzposition in der Ringkammer. Sein Innendurchmesser Dwi entspricht dem Durchmesser der radial äußeren Mantelfläche des Füllrings 12 in der Ringkammer und somit dem inneren Durchmesser des Wulstes Dsi in dessen Sitzposition in der Ringkammer. Der Kern mit einer Dicke d, beispielsweise ist d= 10mm, in radialer Richtung hat in der radialen Position der halben radialen Dicke einen mittleren Kerndurchmesser Dwk durch die Reifenachse, der dem mittleren Kerndurchmesser Dsk in der Sitzposition des Wulstes in der Ringkammer entspricht. Dmax ist größer als Dsa, Dsa ist größer als Dsk, Dsk ist größer als Dmin, Dmin ist größer als Dsi.

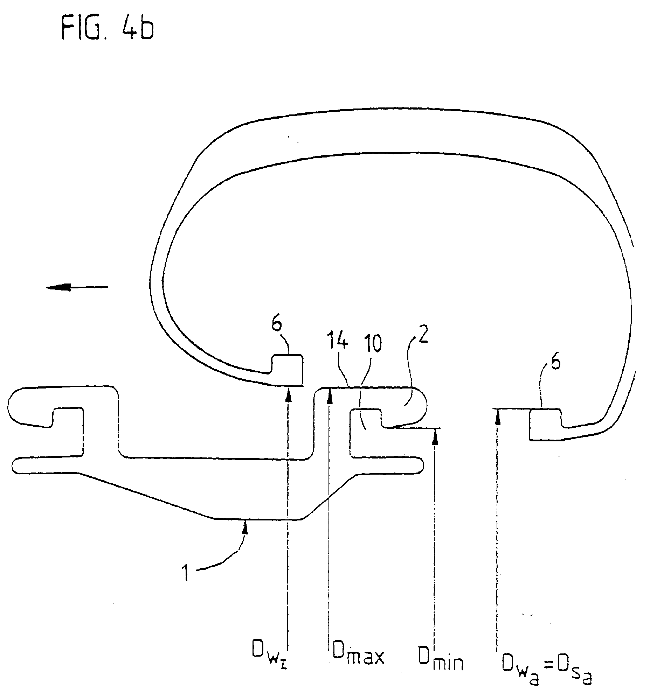

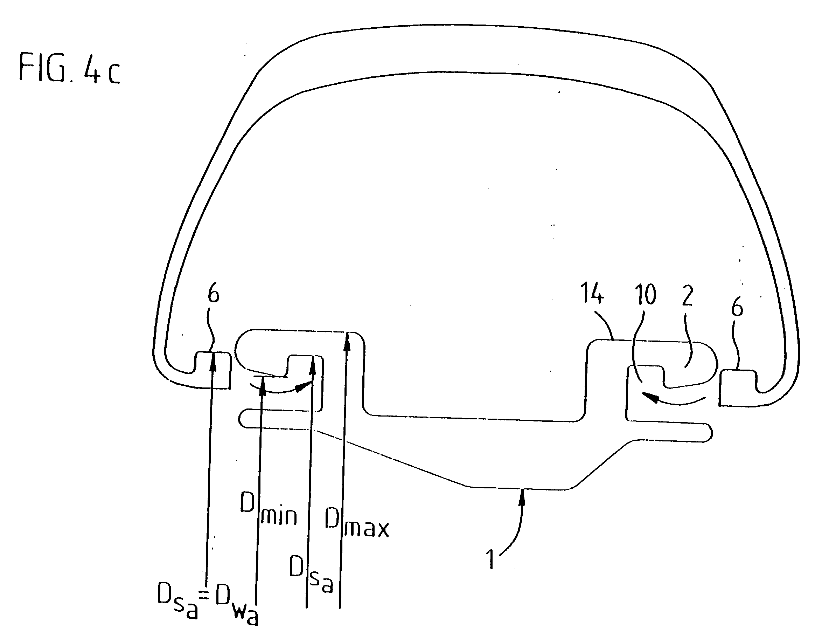

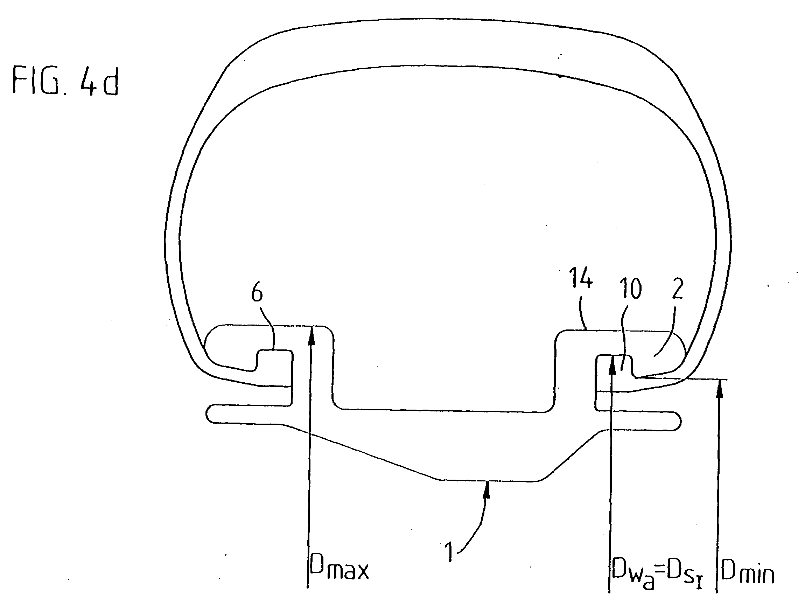

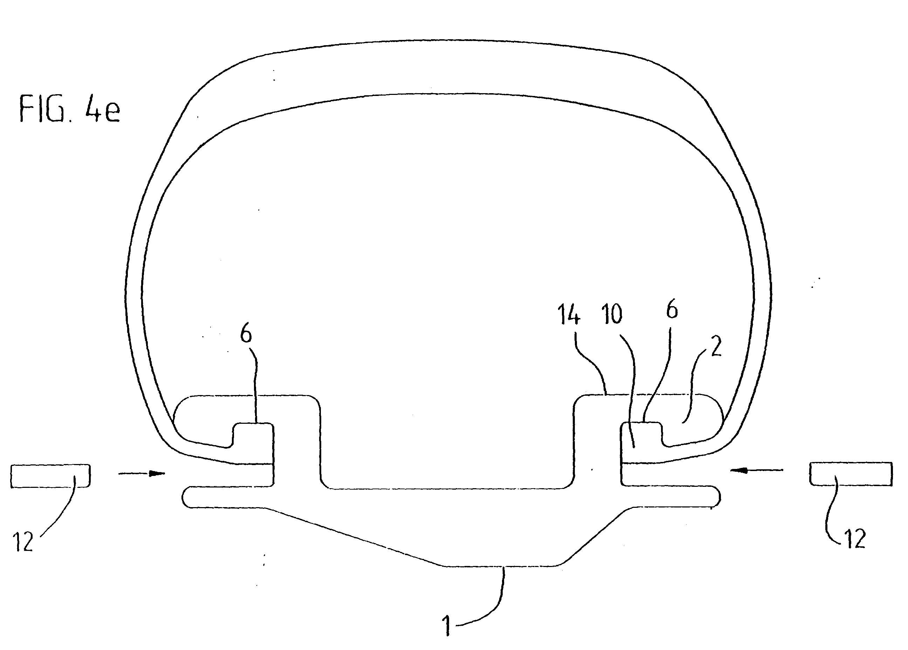

Zur Montage wird der Reifen 3 konzentrisch zur Felge an die Felge in den Figuren von rechts axial herangeführt. Der linke Wulst wird entgegen der elastischen Rückstellkräfte des Wulstes in Umfangsrichtung soweit gedehnt, daß der Innendurchmesser Dwi des Wulstes größer als der maximale Außendurchmesser Dmax der Notlaufstützflächen ist. Danach wird, wie in Figur 4b dargestellt ist, der Reifen 3 weiter konzentrisch zur Felge axial zur Felge hinbewegt, wobei der linke Wulst unter Beibehaltung seines gedehnten Zustandes mit Spiel zu den Notlaufstützflächen 14 axial über die Felge geschoben wird. Sobald der linke Wulst eine Position auf der linken Seite axial außerhalb des linken Felgenhorns erreicht hat wird der Wulst unter Ausnutzung der elastischen Rückstellkräfte wieder in seiner Umfangslänge soweit zurückgestellt, daß er wieder den ungedehnten und ungestauchten Zustand einnimmt. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Wie durch die Pfeildarstellung von Fig 4c dargestellt, werden beide Wülste nun entgegen der elastischen Rückstellkräfte in ihrer Umfangslänge soweit gestaucht, daß der Außendurchmesser Dwa des Wulstes kleiner als der minimale Felgenhorndurchmesser Dmin ist.In diesem Zustand werden die Wülste mit Spiel zum Felgenhorn axial in die jeweilige Ringkammer eingeführt. Unter Ausnutzung der elastischen Rückstellkräfte werden die Wülste wieder in ihrer Umfangslänge soweit zurückgestellt, daß sie wieder den ungedehnten und ungestauchten Zustand einnehmen. Aufgrund der Konizität der zu den Ringkammerwänden 21 und 23 weisenden Wulstseiten und der korrespondierend konisch ausgebildeten Ringkammerwände 21 und 23 werden die Wülste bei der Umfangslängenrüchstellung genau in ihrer Betriebsposition in der Ringkammer positioniert. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Die Wülste sitzen ungedehnt und ungestaucht in der Ringkammer. Dieser Zustand ist in Fig.4d dargestellt. Wie in Fig4e dargestellt ist, wird nun jeweils ein Füllring 12 von axial außen zwischen unterem Seitenwandbereich 16 des Reifens und Lagerfläche 30 axial soweit eingeführt, daß die Ringkammer vollständig von Wulst und Füllring ausgefüllt ist. Der vollständige Formschluß zwischen einstückiger Ringkammer und Wulst ist hergestellt.

Zur Demontage wird entsprechend zunächst der Füllring axial nach außen entfernt. Danach werden die Wülste soweit gestaucht, daß sie mit Spiel zum Felgenhorn aus der Ringkammer gezogen werden können. Nach der Rückstellung der Umfangslänge wird ein Wulst soweit gedehnt, daß er mit Spiel zu den Notlaufstützflächen axial von der Felge gezogen werden kann.

Es ist auch denkbar, den Reifen zur Montage anstatt ihn axial zu verschieben, zunächst um 90 ° zu drehen und dann zu dehnen und im gedehnten Zustand in radialer Richtung auf die Felge zu schieben, um ihn dort wieder um 90 ° zurückzudrehen, so daß sich die beiden Wülste jeweils axial außerhalb der Felge befinden. Die weitere Montage erfolgt wie oben beschrieben.

Im einem Ausführungsbeispiel ist der Durchmesser Dmax beispielsweise um das 1,2-fache größer als der Innendurchmesser Dsi des Wulstes in der Sitzposition in der Ringkammer und der minimale Felgenhorndurchmesser ist um den Faktor 1,025 kleiner als der Außendurchmesser Dsa des Wulstes in der Sitzposition in der Ringkammer. Als Gummimaterial des Wulstes wird ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Beispielsweise wird ein bekanntes Gummimaterial verwendet, das eine Umfangsdehnung des Wulstes um 25% und eine Umfangsstauchung um 2,7% ermöglichen.

Die Notlaufstützflächen können auch mit einem größeren oder kleineren maximalen Außendurchmesser Dmax entsprechend den individuell einzustellenden Notlaufeigenschaften eines Reifens ausgebildet sein. Der maximale Durchmesser Dmax der Notlaufstützflächen ist dabei bei Standardreifen optimalerweise um einen Faktor1,1 bis 1,2 größer als der Innenringdurchmesser Dsi des Wulstkerns im montierten Zustand des Fahrzeugrades. Er kann in Spezialfällen jedoch auch um einen Faktor zwischen 1,05 und 1,3 größer sein als der Innenringdurchmesser Dsi des Wulstkerns im montierten Zustand des Fahrzeugrades. Als Gummimaterial des Wulstes wird hierfür jeweils ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Dementsprechend wird der Wulst, der im montierten Zustand des Fahrzeugrades ungedehnt und ungestaucht ist, derart ausgebildet, daß er eine Dehnbarkeit zwischen 10 und 20 % und eine Stauchbarkeit von 2,5 bis 3,5 % bei Standardreifen und in den Spezialfällen eine Dehnbarkeit zwischen 5 und 30 % und eine Stauchbarkeit zwischen aufweist 1 bis 5% aufweist.

Es ist auch denkbar, einen Notlaufsattel auf der radial äußeren Mantelfläche auszubilden, dessen Notlaufstützfläche sich über den gesamten axialen Mittenbereich der Felge erstreckt. Diese kann beispielsweise über die gesamte axiale Gürtelbreite des Reifens ausgebildet sein.

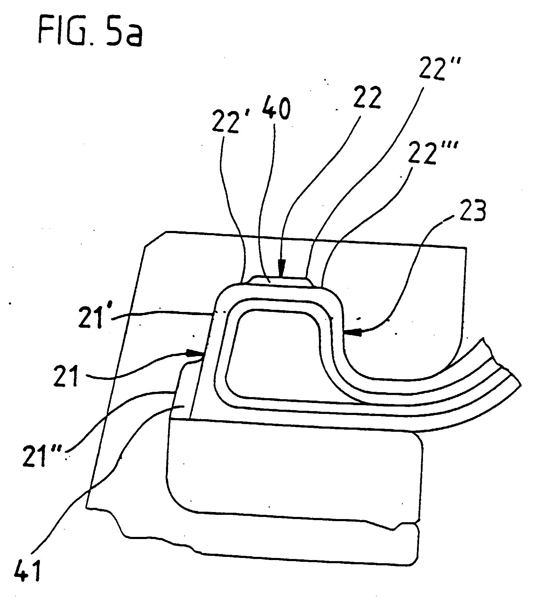

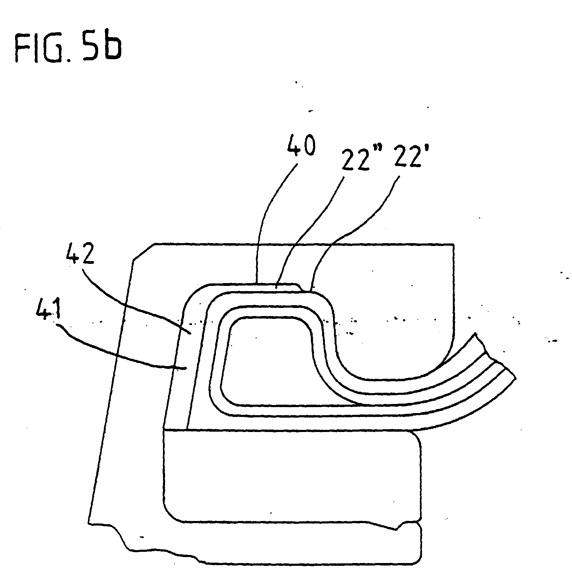

In den Fig. 5 a und 5b sind alternative Ausführunsformen von Ringkammer und Füllring mit gezielt ausgebildeten Spaltbereichen zwischen Füllring und Ringkammerwänden dargestellt. Dabei ist in einer ersten Ausführungsform zwischen radial äußerer Ringkammerwand 22 und zu ihr hin gerichteter radial äußerer Mantelfläche des Wulstes in einem axialen Teilabschnitt 22'' ein Spaltbereich 40 ausgebildet. Axial beiderseits des Spaltbereichs schließen sich Teilabschnitte 22' bzw 22''' an, in denen die radial äußere Ringkammerwand 22 und die zu ihr hin gerichtete radial äußerer Mantelfläche des Wulstes in radialem Formschluß stehen. Bei Einschieben des Füllrings in die Sitzposition wird überschüssiges Wulstmaterial in den Spaltbereich gedrängt und belastet auf diese Weise nicht in ungewünschter Weise den Kern 8 und die Formschlußverbindung. Alternativ zum Spaltbereich 40 ist es möglich zwischen axial innerer Ringkammerwand 21 und zu ihr hin gerichteter axial innerer Wulstseite in einem radialen Teilabschnitt 21'' einen Spaltbereich 41 auszubilden.In einem ― wie in Fig. 5a dargestellt- oder beiden benachbarten radialen Teilabschnitten 21' besteht axialer Formschluß zwischen axial innerer Ringkammerwand 21 und der zu ihr hin gerichteten axial inneren Wulstseite. Es ist möglich ― wie in Fig. 5a dargestellt ist ― den Spaltbereich 41 in einem radial inneren zum Füllring weisenden radialen Teilabschnitt 21'' auszubilden, wobei sich der Füllring noch über den axialen Erstreckungsbereich des Spalts erstreckt. Auf diese Weise kann zusätzlich zur Demontage des Ringwulstes nach Entfernen des Füllrings in den Spaltbereich eingegriffen werden sodaß der Ringwulst an seiner axial inneren Wulstseite zum Lockern und Herausziehen des Ringwulstes angegriffen werden kann. Hierzu kann ― falls erforderlich ― auch ein geeignetes z.B. hakenförmiges Werkzeug bekannter Art eingesetzt werden. In einer weiteren Ausführung wird, wie in Fig.5a dargestellt ist, sowohl ein Spaltbereich 40 als auch ein Spaltbereich 41 ausgebildet. In einer weiteren in Fig.5b dargestellten Ausführungsform ist zwischen radial äußerer Ringkammerwand 22 und zu ihr hin gerichteter radial äußerer Mantelfläche des Wulstes in einem axialen Teilabschnitt 22'' der Spaltbereich 40 ausgebildet. Auf der axial nach außen gerichteten Seite des Spaltbereichs schließt sich der Teilabschnitt 22' an, in dem die radial äußere Ringkammerwand 22 und die zu ihr hin gerichtete radial äußerer Mantelfläche des Wulstes in radialem Formschluß stehen. Zwischen axial innerer Ringkammerwand 21 und zu ihr hin gerichteter axial innerer Wulstseite ist der Spaltbereich 41 ausgebildet. Der Spaltbereich 41 geht an der radial äußeren Erstreckung in den Spaltbereich 40 über, sodaß sie einen gemeinsamen Spaltbereich 42 bilden. Die Spaltbereiche 40 bzw 41 der genannten Ausführungsformen erstrecken sich entweder vollständig ringförmig in Umfangsrichtung des Reifens oder sie werden jeweils aus in Umfangsrichtung voneinander getrennte ringsegmentarteige Spaltbereiche ausgebildet, zwichen denen stegförmige formschlüssige Kontaktbereiche zwischen Wulst und Ringkammer ausgebildet sind.

Der Spaltbereich 42 ist in einer Ausführungsform dabei so ausgelegt, daß der Ringwulst nach Einführen in die Ringkammer in diesen Spaltberiecheingeschoben werden kann. Mit radialem Spiel zwiischen Füllring und Wulst kann dann der Füllring in seine Sitzposition in der Ringkammer eingeführt werden. Bei Befüllen des Fahrzeugrades mit Luft erzeugt der Innendruck axial nach außen in Richtung der Durchgangsöffnung der Ringkammer gerichtete Zugkräfte im Wulst, aufgrund derer Der Wulst aus dem Spaltbereich 42 in seine formschlüssige Sitzposition in der Ringkammer rutscht.

### Bezugszeichenliste

- 1: Felge
- 2: Felgenhorn
- 3: Fahrzeugluftreifen
- 4: Karkasse
- 5: Gürtel
- 6: Wulstbereich
- 7: Verdickung
- 8: Kern
- 9: Seitenwand
- 10: Ringkammer
- 11: Notlaufsattel
- 12: Füllring
- 13: Abriebfester Streifen
- 14: Notlaufsatteloberfläche
- 15: Lauffläche
- 16: unterer Seitenwandbereich
- 17: Festigkeitsträger
- 20: Ringkammerwand
- 21: Ringkammerwand
- 22: Ringkammerwand
- 23: Ringkammerwand
- 24: Ringöffnung
- 25: Innenseite des Felgenhorns
- 26: Stirnfläche des Felgenhorns
- 30: Lagerfläche

## Patentansprüche

1. Fahrzeugrad mit ― insbesondere einteiliger - Felge und schlauchlosem Luftreifen, das für Notlauf geeignet ist,
- mit auf der radial äußeren Mantelfläche der Felge ausgebildeter Notlaufstützfläche
- mit an jeder Seitenwand des Luftreifens zur Innenseite des Luftreifens hin verdickt ausgebildetem Wulst zur Befestigung des Luftreifens an der Felge,
- mit wenigstens in einer axialen Stirnseite der Felge einstückig ausgebildeter Ringkammer mit einer radial inneren,einer radial äußeren, einer axial zur Felgenmitte hin inneren und einer axial zur Felgenaußenseite hin äußeren Ringkammerwand, die nach axial außen zur Stirnseite der Felge hin im radial äußeren Bereich als ein radial nach innen gerichtetes Felgenhorn ausgebildet und in ihrem radial inneren Bereich mit einer ringförmigen Durchgangsöffnung ausgebildet ist,
- wobei ein Füllring innerhalb der Ringkammer auf der radial inneren Ringkammerwand formschlüssig radial fest gelagert ist,
- wobei die Seitenwand des Reifens sich zumindest im Betriebszustand des Fahrzeugrades von axial außen durch die Öffnung in der axial außen ausgebildeten Ringkammerwand hindurch nach innen erstreckt und der Wulst in der Ringkammer auf der radialen Außenseite des Füllrings radial fest gelagert ist und formschlüssig nach radial außen, nach axial innen und nach axial außen zur Ringkammer ausgebildet ist, sodaß der Wulst nach radial außen, nach axial außen, nach axial innen und über den Füllring nach radial innen formschlüssig mit der einstückig ausgebildeten Ringkammer verbunden ist,
- wobei die radial äußere zur radial äußeren Ringkammerwand hin gerichtete Seite des Wulstes zumindest im Betriebszustand des Fahrzeugrades nach radial außen mit formschlüssigem Berührkontakt zur radial äußeren Ringkammerwand angeordnet ist,
- wobei in einem Teilbereich zwischen radial äußerer zur radial äußeren Ringkammerwand hin gerichteter Seite des Wulstes und radial äußeren Ringkammerwand ein radialer Spaltbereich ausgebildet ist, in dem sich Wulst und Ringkammerwand im Betrieb nicht berühren,
- wobei der Wulst insbesondere über seine ganze axiale Erstreckung nach radial innen vollständig auf dem Füllring aufliegt.

2. Fahrzeugrad gemäß den Merkmalen von Anspruch 1,
- wobei der Wulst zumindest im Zustand der Montage und/oder der Demontage des Fahrzeugrades an der nach axial innen zur axial inneren Ringkammerwand gerichteten Seite der Verdickung von axial innen nach axial außen hin konisch erweitert mit einem Steigungswinkel α zur Radialen ausgebildet ist, wobei a ein spitzer Winkel ist.

3. Fahrzeugrad gemäß den Merkmalen von Anspruch 1 oder 2,
- wobei der Wulst zur Befestigung des Luftreifens an der Felge in seiner Umfangslänge - insbesondere elastisch - veränderbar ausgebildet ist.

4. Fahrzeugrad gemäß den Merkmalen von Anspruch 2 oder 3,
wobei für a gilt: 2°≤α≤15°, insbesondere 5°≤α≤10°.

5. Fahrzeugrad gemäß den Merkmalen von einem oder mehreren der vorangegangenen Ansprüche,
- wobei der Wulst zumindest im Zustand der Montage und/oder der Demontage und im Betriebszustand des Fahrzeugrades an der nach axial außen zur axial äußeren Ringkammerwand gerichteten Seite der Verdickung von axial innen nach axial außen hin konisch verjüngt mit einem Steigungswinkel β zur Radialen ausgebildet ist und zumindest im Bereich dieser Steigung formschlüssig an der korrespondierend ausgebildeten axial äußeren Ringkammerwand anliegt, wobei β ein spitzer Winkel ist.

6. Fahrzeugrad gemäß den Merkmalen von Anspruch 5,
wobei für β gilt: 0°< β ≤5°, insbesondere 2° ≤ β ≤3°.

7. Fahrzeugrad gemäß den Merkmalen von einem oder mehreren der vorangegangenen Ansprüche,
wobei der Wulst zumindest im Zustand der Montage und/oder der Demontage und im Betriebszustand des Fahrzeugrades mit einem trapezförmigen Querschnitt ausgebildet ist mit einer radial äußeren zur radial äußeren Ringkammerwand hin ausgebildeten Mantelfläche mit zylindrischen Bereich, mit einer radial inneren im Betriebszustand auf dem Füllring aufliegenden Mantelfläche mit zylindrischen Bereich, mit an der nach axial innen zur axial inneren Ringkammerwand hin gerichteten Seite der Verdickung von axial innen nach axial außen hin konisch erweiterter Stirnseite mit einem Steigungswinkel α zur Radialen, wobei α ein spitzer Winkel ist, und mit an der nach axial außen zur axial äußeren Ringkammerwand hin gerichteten Seite der Verdickung von axial innen nach axial außen hin konisch verjüngter Stirnseite mit einem Steigungswinkel β zur Radialen, die zumindest im Bereich dieser Steigung formschlüssig an der korrespondierend ausgebildeten axial äußeren Ringkammerwand anliegt, wobei β ein spitzer Winkel ist.

8. Fahrzeugrad gemäß den Merkmalen von einem oder mehreren der vorangegangenen Ansprüche,
wobei der Füllring an seiner äußeren Mantelfläche im wesentlichen zylindrisch ausgebildet ist.

9. Fahrzeugrad gemäß den Merkmalen von einem oder mehreren der vorangegangenen Ansprüche,
- wobei zumindest in einem Teilbereich zwischen axial innerer zur axial inneren Ringkammerwand hin gerichteter Seite des Wulstes und axial innerer Ringkammerwand ein axialer Spaltbereich ausgebildet ist, in dem sich Wulst und Ringkammerwand im Betrieb nicht berühren.

10. Fahrzeugrad gemäß den Merkmalen von Anspruch 9,
- wobei die axial innere zur axial inneren Ringkammerwand hin gerichtete Seite des Wulstes zumindest im Betriebszustand des Fahrzeugrades nach axial innen mit formschlüssigem Berührkontakt zur axial inneren Ringkammerwand angeordnet ist.

11. Fahrzeugrad gemäß den Merkmalen von Anspruch 10,
- mit zumindest in einem Teilbereich zwischen axial innerer zur axial inneren Ringkammerwand hin gerichteter Seite des Wulstes und axial innerer Ringkammerwand ausgebildetem, radial nach innen vom Füllring begrenztem, axialem Spaltbereich, in dem sich Wulst und Ringkammerwand im Betrieb nicht berühren.

12. Fahrzeugrad gemäß den Merkmalen vonAnspruch 10 oder 11,
- wobei sich der axiale Spaltbereich zwischen axial innerer zur axial inneren Ringkammerwand hin gerichteter Seite des Wulstes und axial innerer Ringkammerwand über die gesamte radiale Erstreckung des Wulstes im Betriebszustand des Fahrzeugrades erstreckt.

13. Fahrzeugrad gemäß den Merkmalen einem oder mehreren der vorangegangenen Ansprüche,
- wobei die radial äußere zur radial äußeren Ringkammerwand hin gerichtete Seite des Wulstes zumindest im Betriebszustand des Fahrzeugrades nach radial außen mit formschlüssigem Berührkontakt zur radial äußeren Ringkammerwand angeordnet ist,
- wobei in einem Teilbereich zwischen radial äußerer zur radial äußeren Ringkammerwand hin gerichteter Seite des Wulstes und radial äußeren Ringkammerwand ein radialer Spaltbereich ausgebildet ist, in dem sich Wulst und Ringkammerwand im Betrieb nicht berühren,
- wobei zumindest in einem Teilbereich zwischen axial innerer zur axial inneren Ringkammerwand hin gerichteter Seite des Wulstes und axial innerer Ringkammerwand ein axialer Spaltbereich ausgebildet ist, in dem sich Wulst und Ringkammerwand im Betrieb nicht berühren,
- wobei der radiale Spaltbereich und der axiale Spaltbereich ineinander übergehen.

14. Fahrzeugrad gemäß den Merkmalen von Anspruch 13,
- wobei der radiale Spaltbereich und der axiale Spaltbereich ineinander übergehen und wobei dieser Gesamtspalt als ein Raum zur Aufnahme des Wulstes bei der Montage und/oder Demontage des Füllrings ausgebildet ist.

15. Fahrzeugrad gemäß den Merkmalen von einem oder mehreren der vorangegangenen Ansprüche,
wobei die axiale Position einer in der radial äußeren Mantelfläche ausgebildeten Notlaufstützfläche zumindest teilweise der axialen Position des in der Felge befestigten Wulstes entspricht.

16. Fahrzeugrad gemäß den Merkmalen von einem oder mehreren der vorangegangenen Ansprüche,
wobei auf wenigstens einem axialen Seitenbereich der radial äußeren Mantelfläche der Felge eine Notlaufstützfläche ausgebildet ist, die sich insbesondere axial soweit nach innen erstreckt, daß der Gürtel in seiner axialen Randzonen von der Schulter mit 10 bis 30 % überdeckt ist.

17. Fahrzeugrad gemäß den Merkmalen von einem oder mehreren der vorangegangenen Ansprüche,
wobei im Wulst ein Gummikern integriert ausgebildet ist,
wobei der Gummikern insbesondere mit einer Shore -A- Härte aus dem Bereich von 80 bis 100, bevorzugt aus dem Bereich zwischen 85 bis 90 ausgebildet ist.

18. Fahrzeugrad gemäß den Merkmalen von einem oder mehreren der vorangegangenen Ansprüche,
wobei der Füllring zum Lösen und/oder zum Befestigen des Wulstes axial bewegbar ausgebildet ist,
wobei die Ringkammer an ihrer radial inneren Seite über ihre gesamte axiale Erstreckung als Lagerfläche zum axialen Aufschieben und zum axialen Abziehen des Füllrings ausgebildet ist und
wobei der Füllring an seiner radial inneren Seite als korrespondierende Lagerfläche ausgebildet ist.

19. Fahrzeugrad gemäß den Merkmalen von einem der vorangegangenen Ansprüche, bei dem der maximale Durchmesser der Notlaufstützflächen um einen Faktor zwischen 1,05 und 1,3 ― insbesondere zwischen 1,1 und 1,2 ― größer als der Innenringdurchmesser des Wulstkerns im montierten Zustand des Fahrzeugrades beträgt.

20. Fahrzeugrad gemäß den Merkmalen von einem der vorangegangenen Ansprüche,
wobei der Wulstkern eine Dehnbarkeit und/oder Stauchbarkeit von 5 bis 30 % - insbesondere 10 bis 20 % - aufweist.

21. Fahrzeugrad gemäß den Merkmalen von einem der vorangegangenen Ansprüche,
wobei der Wulstkern eine Dehnbarkeit von 5 bis 30 % -insbesondere 10 bis 20 % - und eine Stauchbarkeit von 1 bis 5% - insbesondere von 2,5 bis 3,5 % - aufweist und
wobei der Wulstkern insbesondere im montierten Zustand des Fahrzeugrades ungedehnt und ungestaucht ist.

22. Fahrzeugrad gemäß den Merkmalen von einem der vorangegangenen Ansprüche,
wobei der Luftreifen mit seinem Wulst an der Felge befestigt ist und im unteren Seitenwandbereich an der Felge anliegt.

23. Fahrzeugrad gemäß den Merkmalen von einem der vorangegangenen Ansprüche,
- wobei der Füllring aus Gummi oder elastischem Kunststoff mit insbesondere einem oder mehreren gummierten ― insbesondere um die Achse des Füllrings wendelförmig gewickelten ― darin eingebetteten Festigkeitsträger ausgebildet ist,
- wobei die Festigkeitsträger textiler Art oder aus Stahl monofilamentartig oder multifilamentartig oder aus Gewebe ausgebildet sind.
